Europäisches Patentamt

European Patent Office

Office européen des brevets

(19)

(11) Veröffentlichungsnummer: **0 095 694**
**B1**

(12) **EUROPÄISCHE PATENTSCHRIFT**

(45) Veröffentlichungstag der Patentschrift:
31.08.88

(21) Anmeldenummer: **83105079.4**

(22) Anmeldetag: **21.05.83**

(51) Int. Cl.⁴: **E 04 C 2/34,** A 01 G 9/14,
A 01 G 9/02, E 04 C 2/22,
E 06 B 3/66

(54) Bauelement zur Herstellung von Gehäusen, Wandscheiben, Kästen und dergleichen Gegenständen.

(30) Priorität: 28.05.82 DE 3220176

(43) Veröffentlichungstag der Anmeldung:
07.12.83 Patentblatt 83/49

(45) Bekanntmachung des Hinweises auf die Patenterteilung:
31.08.88 Patentblatt 88/35

(84) Benannte Vertragsstaaten:
AT BE CH FR GB IT LI LU NL SE

(56) Entgegenhaltungen:
CH-A-593 401
DD-A-88 844
DE-A-2 221 608
GB-A-1 485 669

(73) Patentinhaber: Diethelm GmbH, Wilhelm- Böttiger-Strasse 35, D-6083 Biebesheim a. Rh. (DE)

(72) Erfinder: Diethelm, Adolf, Dr.,
Reussensteinstrasse 20, D-7312 Kirchheim (Teck) (DE)

(74) Vertreter: Becker, Maria, Dipl.- Phys., Auf dem Haigst 29, D-7000 Stuttgart 70 (DE)

EP 0 095 694 B1

## Beschreibung

Die Erfindung betrifft ein wärmedämmendes Bauelement, zur Herstellung von Gehäusen, Wandscheiben, Kästen und dergleichen Gegenständen geeignet, mit zwei im Abstand voneinander angeordneten, entlang ihres Randes miteinander verbundenen Wänden aus Kunststoff, in deren Zwischenraum, diesen in voneinander getrennte, luftgefüllte Zellen unterteilende, Aussteifungselemente eingebracht sind.

Ein Bauelement dieser Art ist aus der DD-A-88 844 bereits bekannt. Seine beiden äußeren Wände bilden dabei Deckschichten, zwischen die ein aussteifender Stützkern eingebracht ist. Dieser Stützkern besteht aus einer Vielzahl von übereinander angeordneten Lagen, die aus Klarsichtfolie bestehen und plissiert sowie jeweils um 90° zueinander versetzt übereinandergeklebt sind.

Die beiden, äußere Deckschichten bildenden Wände sind randseitig beispielsweise mittels eines umlaufenden U-Profilstabes miteinander verbunden, um dadurch die Schmalseiten des Bauelementes zu schützen. Dabei sind zumindest sechs übereinandergeschichtete Klarsichtfolien mit einer Falthöhe von ca. 5 mm erforderlich, um bei noch ausreichender Lichtdurchlässigkeit die notwendige Aussteifung des Bauelementes zu gewährleisten.

Der sandwichartige, eine große Dicke bewirkende Aufbau dieses Bauelementes ist für die Herstellung lichtdurchlässiger Elemente, beispielsweise für den Ersatz von Fenstern oder in Dächern vorzusehenden Lichtfeldern, geeignet. Dieser läßt aber weder eine selbsttragende, noch großflächige Ausbildung zu, um selbst als tragendes Teil eingesetzt werden zu können, da in dieser Hinsicht kein statisch wirksamer Aufbau vorliegt. Dabei vermindern die den Stützkern bildenden, ziehharmonikaartig gefalteten Kunststoffolien die Lichtdurchlässigkeit auf ein Minimum.

Der Erfindung liegt die Aufgabe zugrunde, ein Bauelement gemäß der eingangs erläuterten Art anzugeben, das bei erheblich vermindertem konstruktiven Aufwand zur Fertigung seines Elementkörpers bei zumindest gleichem Wärmedämmeffekt als großflächiges, selbsttragendes und lichtdurchlässiges Teil einsetzbar ist.

Diese Aufgabe wird erfindungsgemäß dadurch gelöst, daß die aus duroplastischem Kunststoff bestehenden Wände die Aussteifungselemente abdecken, die durch miteinander verschweißte, die Zellen begrenzenden Eisenstäbe wenigstens eines Armierungsgitters gebildet sind.

Das erfindungsgemäße Bauelement umfaßt somit lediglich noch zwei Wände bzw. eine äußere und eine innere Wand, wobei die Tragfähigkeit des Bauelements durch die Eisenstäbe des Armierungsgitters bestimmt wird, so daß die beiden Wände eine geringe Wandstärke von wenigen Millimetern erhalten können.

Das Armierungsgitter bietet den Vorteil, daß es große Formstabilität gewährleistet, seine Stäbe lediglich durch Abwinkeln bzw. Abbiegen in jede gewünschte Stellung gebracht werden können, wonach sich dann auf das Armierungsgitter Außen- und Innenwand aufbringen lassen.

Dabei kann die gegenseitige Zuordnung von Wänden und Armierungsgitter so getroffen sein, daß der sich zwischen beiden Wänden befindende Zwischenraum in großräumige Zellen unterteilt sein kann.

Das Bauelement eignet sich insbesondere zur Fertigung von Teilen, die beispielsweise in Gärtnereien gefragt sind. Sie können Bauteile von zu erstellenden Gewächshäusern oder beispielsweise Pflanzkästen bilden, die sich durch ein verhältnismäßig großes Fassungsvolumen, entsprechende Verwindungssteifigkeit und gute, wärmedämmende Eigenschaften auszeichnen sollen.

Die Verwendung eines Armierungsgitters zur Aussteifung ermöglicht beispielsweise die Herstellung von Bauelementen, die, aneinandergereiht, die Seitenwände und die Bedachung eines Gewächshauses bilden können. Dies ist möglich, wenn das Armierungsgitter in eine U-Form gebracht wird, wobei dann die U-Schenkel die Seitenwände und der diese miteinander verbindende Verbindungssteg den insbesondere giebeldachförmig ausgebildeten oder nach oben konvex gekrümmten Dachteil bilden.

Günstig ist es hierbei, an die Stirnkanten solcher zum Bau von Gewächshäusern vorgesehener Bauelemente geeignete Verbindungsmittel vorzusehen, die beim Aneinanderreihen solcher Bauelemente zugleich deren feste, gegenseitige Verbindung ermöglichen. Solche Verbindungsmittel können beispielsweise im Querschnitt schwalbenschwanzförmig ausgebildete Verbindungsleisten sein, die sich beim Absetzen der Bauelemente ineinanderschieben lassen.

Der von solchen Verbindungsleisten freie Bereich der Stirnkanten kann mit weiteren, insbesondere flexiblen, bandförmigen Anschlusselementen ausgestattet sein, die einen wetterfesten und ggf. fugendichten, gegenseitigen Montageanschluß ermöglichen.

Auch erfindungsgemäß ausgebildete Kästen, beispielsweise Pflanzkästen, lassen sich in einfacher Weise so gestalten, daß sie baukastenartig aneinandergereiht werden können. Derartige Pflanzkästen bilden gegenüber üblichen Pflanztischen, wie sie beispielsweise bisher in Gewächshäusern Verwendung finden, den Vorteil, daß der Humusboden in diesen wesentlich höher aufgetragen werden kann als auf Pflanztischen. Während auf letzteren die Humusschicht üblicherweise ca. 10 cm hoch aufgeschüttet ist, kann sie in erfindungsgemässen Pflanzkästen eine Mindesthöhe von ca. 50 cm haben. Hierdurch ist eine erheblich dichtere Bepflanzung möglich, da sich die Pflanzenwurzeln in die Tiefe der Humusschicht orientieren können.

Ferner können z. B. bei Pilz- oder anderen Pflanzenkrankheiten einzelne Pflanzkästen, die mit befallenen Pflanzen bestückt sind, aus einer Reihe von Pflanzkästen herausgenommen, desinfiziert und wieder eingesetzt werden.

Zur Erhöhung der Bruchfestigkeit des Bauelementes ist es günstig, die Wände glasfaserverstärkt auszubilden.

Die Isoliereigenschaften lassen sich dabei optimal gestalten, wenn die Wände entlang ihres Randes miteinander einstückig oder dicht verbunden sind, so daß im Bauelement Luft eingeschlossen und dadurch die Ausbildung von Konvektion nicht möglich ist.

Da die schalenförmigen Bauelemente selbsttragend ausgesteift sind, kann für deren Wände eine geringe Dicke gewählt werden, die nicht grösser als ca. 2 mm ist. Dadurch ist das Gewicht solcher Bauelemente in Grenzen zu halten. Solche Bauelemente eignen sich vorteilhaft zum Bau von Gewächshäusern, wobei u. a. gegenüber üblichen Glas- oder Kunststoffkonstruktionen das Eigengewicht solcher Bauelemente wesentlich geringer ist. Für solche Einsatzzwecke können die Wände der Bauelemente lichtdurchlässig ausgebildet sein.

In der Zeichnung sind Ausführungsbeispiele erfindungsgemässer Bauelemente dargestellt. Es zeigen:

Fig. 1   einen Querschnitt durch ein ein Teilstück eines Gewächshauses bildenden Bauelementes;

Fig. 1a   einen in Fig. 1 durch einen strichpunktierten Kreis angedeuteten Ausschnitt dieses Bauelementes in größerem Maßstab als Fig. 1;

Fig. 2   einen Querschnitt durch einen Pflanzkasten;

Fig. 3   einen Teilschnitt entlang der Linie 3 - 3 der Fig. 2 in größerem Maßstab als Fig. 2.

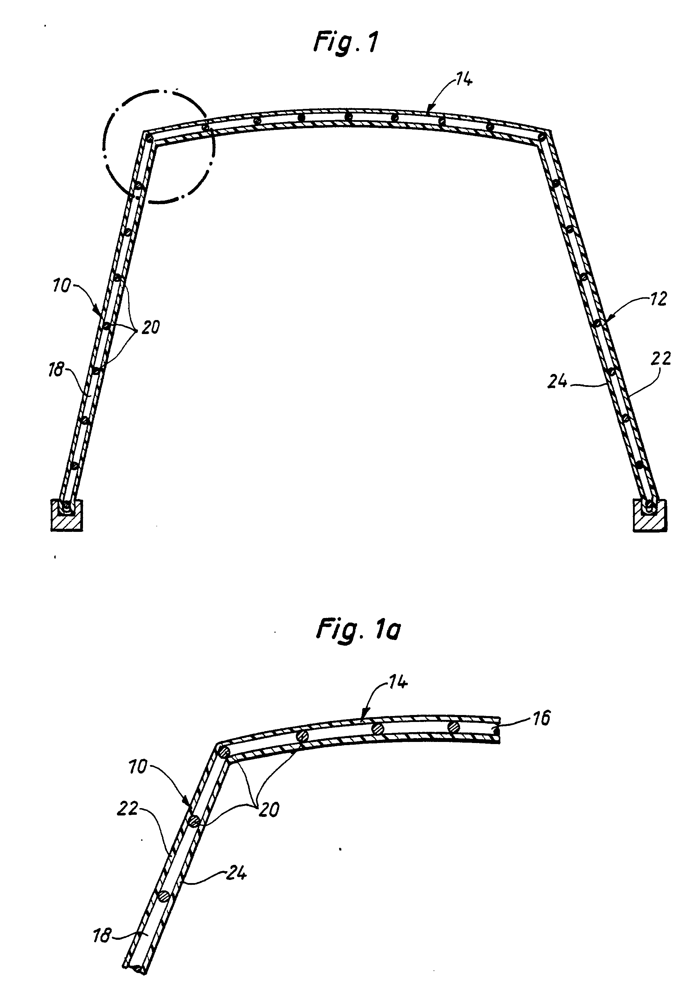

Das in Fig. 1 gezeigte, ein Teilstück eines Gewächshauses bildende Bauelement weist einen U-förmigen Querschnitt auf, wobei dessen Schenkel 10, 12 ein Teilstück der Wandscheiben des Gewächshauses und der die Schenkel 10, 12 miteinander verbindende Verbindungssteg 14 ein Teilstück des Gewächshausdaches bilden. Das Bauelement ist selbsttragend ausgelegt und hierzu mit einem Armierungsgitter 16 ausgestattet, das aus Eisenstäben 18, 20 besteht, die in einer Ebene in senkrechter Anordnung zueinander miteinander verschweißt sind. Bevorzugt finden Armierungsgitter 16 Verwendung, wie sie im Betonbau als Bewehrungselemente verarbeitet werden.

Das Armierungsgitter 16 ist zwischen zwei Wänden 22, 24 aus duroplastischem, vorzugsweise glasfaserverstärktem Kunststoff eingebettet, die entlang der unteren Längskanten der Schenkel 10, 12 miteinander einstückig oder stoffschlüssig verbunden sind. Die Wände 22, 24 können eine minimale Dicke von ca. 0,6 mm haben und bis zu einer maximalen Dicke von 10 mm ausgebildet sein. Sie können derart auf das Armierungsgitter 16 aufgebracht sein, daß dieses in Verbindung mit den Wänden 22, 24 eine Vielzahl von quadratischen oder rechteckförmigen, luftgefüllten Zellen bildet. Die Wände 22, 24 bilden somit eine sich durch gute Transparenz auszeichnende Plastikumhüllung, die in Verbindung mit dem Armierungsgitter 16 selbsttragend und außerordentlich formstabil ist, da zwischen den Wänden 22, 24 und letzterem praktisch keine Relativbewegungen möglich sind.

Es ist klar, daß die an den Stirnenden eines Gewächshauses vorzusehenden Bauelemente an ihrer einen Stirnseite geschlossen auszubilden sind, wobei die betreffende Stirnwand eben oder nach außen gewölbt sein kann.

Es ist ebenso einleuchtend, daß auch eine Konstruktion denkbar ist, bei der Handscheiben und Dachteil getrennt voneinander angefertigt und in geeigneter Weise miteinander verbunden werden können. Eine solche Konstruktion wird man beispielsweise für Gewächshäuser vorziehen, die sehr hoch und sehr breit auszulegen sind.

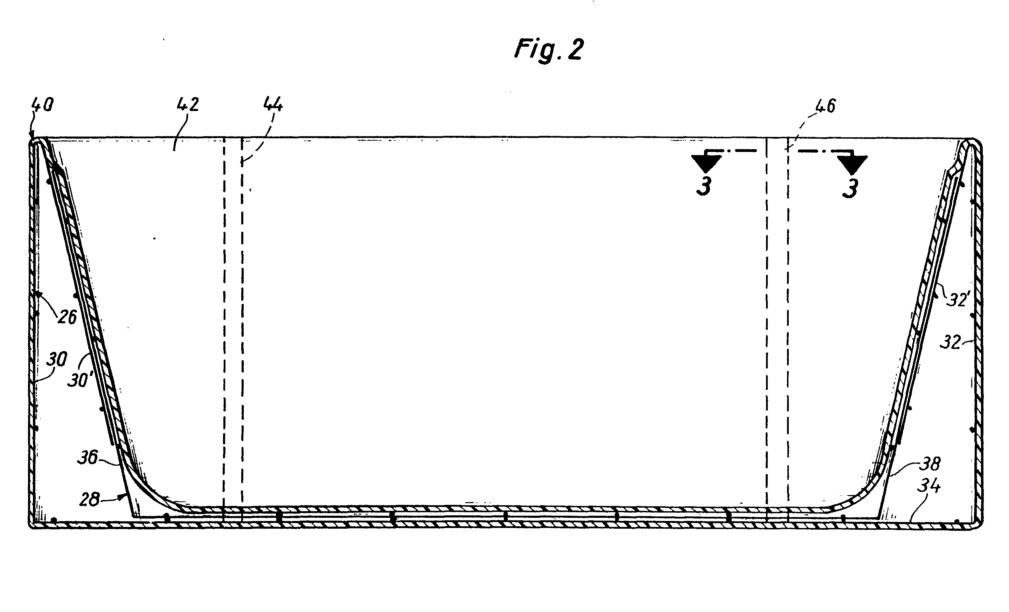

Der in Fig. 2 gezeigte Pflanzkasten weist eine innere Armierung auf, die beispielsweise durch zwei ineinander angeordnete Armierungsgitter 26, 28 gebildet ist, die beide U-förmig gestaltet sind, wobei das innere 28 mit seinem die U-Schenkel 36, 38 miteinander verbindenden ebenen Verbindungssteg auf dem ebenen Verbindungssteg 34 des anderen Armierungsgitters 26 aufruht. Die U-Schenkel 30, 32 sind hierbei senkrecht zu dem sie miteinander verbindenden Verbindungssteg 34 nach oben abgewinkelt, während die U-Schenkel 36, 38 des inneren Armierungsgitters 28 von unten schräg nach oben und außen gerichtet sind, so daß sie sich mit ihrem oberen Randteil den U-Schenkeln 30, 32 des Armierungsgitters 26 nähern. Letztere U-Schenkel 30, 32 sind mit einem Schenkelteilstück 30' bzw. 32' schräg nach innen und unten derart abgebogen, daß sie ungefähr parallel zu den U-Schenkeln 36, 38 liegen. Beide Armierungsgitter 26, 28 sind an ihrer Außenseite von einer glasfaserverstärkten Umhüllung 40 aus duroplastischem Kunststoff umgeben, die in Verbindung mit den Armierungsgittern 26, 28 verwindungssteifen Trog bilden, dessen sich nach oben im Querschnitt keilförmig verjüngenden Seitenwände wärmeisolierende Luftkammern bilden, wobei auch zwischen den inneren und äußeren, unteren Schalenteilen eine gute Isolierung bewirkende Luft vorhanden ist.

Der Pflanzkasten weist Stirnwände 42 auf, die ebenfalls durch mit duroplastischem Kunststoff umhüllte Armierungsgitter 50 gebildet sind. An ihrer Außenseite sind die Stirnwände beispielsweise mit zwei im Parallelabstand voneinander vorgesehenen leistenartigen Verbindungselementen 44, 46 mit schwalbenschwanzförmigem Querschnitt ausgestattet, um aneinander anzureihende Pflanzkästen miteinander fest verankern zu können. Während die Verbindungselemente 44, 46 eine Schwalbenschwanznut 48 besitzen, bilden die an der gegenüberliegenden Stirnwand angeformten Verbindungselemente einen in eine solche Schwalbenschwanznut passenden Schwalbenschwanzsteg. Es können auch andere geeignete Verbindungsmittel vorgesehen sein. Zwischen den einander benachbarten Außenflächen der Stirnwände können Abdichtungen in Form von Gummileisten oder geeigneten Kunststoffmassen vorgesehen sein.

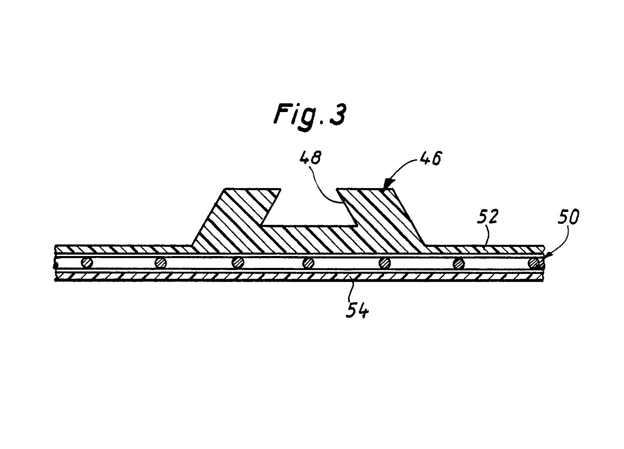

In Fig. 3 sind das Armierungsgitter der Stirnwände mit 50 und deren dasselbe umschließenden, Schalen bildenden Wände mit 52 und 54 bezeichnet.

Der gezeigte Pflanzkasten besitzt vorzugsweise eine Höhe von 50 cm und eine Breite von 125 cm und kann eine Länge von mehreren Metern haben. Die Dicke der Wände beträgt bei einer bevorzugten Ausführungsform ca. 1,5 mm.

Der verwendete duroplastische Kunststoff kann transparent sein, wenn er zum Bau von Gewächshäusern verwendet wird. Für viele Zwecke eignet sich aber auch ein nichttransparenter Kunststoff.

Sorgfältig durchgeführte Versuche mit Pflanzkästen der beschriebenen Art haben überraschend günstige Ergebnisse gezeigt. So ist der Wasserverbrauch in den Pflanzkästen gegenüber einer Bepflanzung in gleicher Größe um ca. 30 % geringer. Der Ertrag dagegen ist schon nach einigen Monaten erheblich größer, was offensichtlich auf eine ausgeglichene Klimatisierung in den Pflanzkästen zurückzuführen ist.

**Patentansprüche**

1. Wärmedämmendes Bauelement zur Herstellung von Gehäusen, Wandscheiben, Kästen und dergleichen Gegenständen, mit zwei im Abstand voneinander angeordneten, entlang ihres Randes miteinander verbundenen Wänden (22, 24) aus Kunststoff, in deren Zwischenraum, diesen in voneinander getrennte, luftgefüllte Zellen unterteilende Aussteifungselemente (20) eingebracht sind,
dadurch gekennzeichnet,
daß die aus duroplastischem Kunststoff bestehenden Wände (22, 24) die Aussteifungselemente (20) abdecken, die durch miteinander verschweißte, die Zellen begrenzenden Eisenstäbe (18, 20) wenigstens eines Armierungsgitters (16 od. 26 od. 28) gebildet sind.

2. Bauelement nach Anspruch 1, dadurch gekennzeichnet, daß die Wände (22, 24) glasfaserverstärkt sind.

3. Bauelement nach Anspruch 1 oder 2, dadurch gekennzeichnet, daß die Wände (22, 24) entlang ihres Randes miteinander einstückig oder dicht verbunden sind.

4. Bauelement nach einem der vorhergehenden Ansprüche, dadurch gekennzeichnet, daß die Dicke der Wände (22, 24) ca. 2 mm beträgt und diese lichtdurchläßig sind.

5. Bauelement nach einem der vorhergehenden Ansprüche, dadurch gekennzeichnet, daß es U-förmig ist, wobei die U-Schenkel (10, 12) die Seitenwände und der diese miteinander verbindende Verbindungssteg (14) den insbesondere giebeldachförmig ausgebildeten oder nach außen konvex gekrümmten Dachteil eines Gewächshauses bilden.

6. Bauelement nach einem der vorhergehenden Ansprüche 1 bis 4, gekennzeichnet durch zwei zur Bildung eines Kastens, insbesondere Pflanzkastens, ineinander angeordnete U-förmige Armierungsgitter (26, 28) sowie diesen stirnseitig zugeordnete Armierungsgitter (50), wobei das innere Armierungsgitter (28) mit seinem die U-Schenkel (36, 38) miteinander verbindenden, ebenen Verbindungssteg auf dem gleichfalls ebenen Verbindungssteg (34) des anderen Armierungsgitters (26) aufruht und die U-Schenkel (36, 38) des inneren Armierungsgitters (28) sich schräg nach außen in Richtung der im wesentlichen senkrecht zu ihrem Verbindungssteg stehenden U-Schenkel (30, 32) des äußeren Armierungsgitters (26) erstrecken und wobei beide U-förmigen Armierungsgitter (26, 28) an ihrer Aussenseite von eine Schale (Umhüllung 40) bildendem duroplastischem Kunststoff umhüllt und die stirnseitigen Armierungsgitter (50) beidseitig von duroplastischen Kunststoff umhüllt sind.

7. Bauelement nach Anspruch 6, dadurch gekennzeichnet, daß ein Teilstück (30', 32') der U-Schenkel (30, 32) des äußeren Armierungsgitters (26) nach innen und unten derart umgebogen sind, daß sich diese Teilstücke im wesentlichen parallel zu den schräg nach oben und außen gerichteten U-Schenkeln (36, 38) des inneren Armierungsgitters (28) erstrecken.

8. Bauelement nach Anspruch 6 oder 7, dadurch gekennzeichnet, daß an den Stirnwänden (42) des Pflanzkastens Verbindungselemente (44, 46) zum gegenseitigen Verbinden von Pflanzkästen angeordnet sind.

**Claims**

1. Thermally insulating construction element for the manufacture of casings, structural wall elements, boxes and such articles comprising two walls (22, 24) made of plastic which are arranged in spaced relation to each other and are joined along their edge, with reinforcing elements (20) inserted in the space between said walls so as to divide said space into individual, air-filled cells, characterized in that said walls (22, 24) consisting of a thermosetting plastic material cover said reinforcing elements (20) which are formed by iron bars (18, 20) of at least one reinforcement grid (16, 26, 28) which are welded together and delimit said cells.

2. Construction element as defined in Claim 1, characterized in that said walls (22, 24) are glass fiber reinforced.

3. Construction element as defined in Claims 1 or 2, characterized in that said walls (22, 24) are integrally or tightly joined along their edge.

4. Construction element as defined in one of the preceding Claims, characterized in that the thickness of said walls (22, 24) is approximately 2 mm and said walls are transparent.

5. Construction element as defined in one of the preceding Claims, characterized in that it is of U-shaped configuration, the legs (10, 12) of the U forming the side walls, and the interconnecting portion (14) which joins said side walls forming the roof section, more particularly, of gable-roof shape or outwardly convexly curved configuration, of a greenhouse.

6. Construction element as defined in one of the preceding Claims 1 to 4, characterized by two U-shaped reinforcement grids (26, 28) disposed within one another and reinforcement grids (50) associated with said U-shaped reinforcement grids (26, 28) at the ends thereof, thereby to form a box, more particularly, a plant box, said inner reinforcement grid (28) resting with its plane interconnecting portion which joins the legs (36, 38) of the U on the likewise plane interconnecting portion (34) of said other reinforcement grid (26), and said legs (36, 38) of the U of said inner reinforcement grid (28) extending obliquely outwardly in the direction of the legs (30, 32) of the U of said outer reinforcement grid (26) extending substantially perpendicularly to their interconnecting portion, and both U-shaped reinforcement grids (26, 28) being enclosed on their outer side by thermosetting plastic material forming a shell (sheathing 40) and said end reinforcement grids (50) being enclosed by thermosetting plastic material on both sides thereof.

7. Construction element as defined in Claim 6, characterized in that portions (30', 32') of the legs (30, 32) of the U of the outer reinforcement grid (26) are bent inwardly and downwardly so as to extend substantially parallel to the obliquely upwardly and outwardly directed legs (36, 38) of the U of the inner reinforcement grid (28).

8. Construction element as defined in Claims 6 or 7, characterized in that connecting elements (44, 46) for mutually joining plant boxes are arranged at the end walls (42) of the plant box.

**Revendications**

1. Elément de construction thermiquement isolant pour la réalisation de bâtiments, de fenêtres, de bacs et analogues, comportant deux parois en matière synthétique (22, 24) agencées de façon écartée l'une de l'autre et reliées l'une à l'autre le long de leur bord, dans l'espace intermédiaire desquelles sont disposés des éléments raidisseurs (20) cloisonnant celui-ci en compartiments remplis d'air, séparés l'un de l'autre,
caractérisé en ce que les parois (22, 24) constituées de matière synthétique thermodurcissable recouvrent les éléments raidisseurs (20), qui sont formés par des tiges de fer (18, 20) d'au moins un treillis d'armature (16 ou 26 ou 28), tiges soudées l'une à l'autre et limitant les compartiments.

2. Elément de construction selon la revendication 1, caractérisé en ce que les parois (22, 24) sont renforcées de fibres de verre.

3. Elément de construction selon la revendication 1 ou 2, caractérisé en ce que, le long de leur bord, les parois (22, 24) sont reliées l'une à l'autre en une seule pièce ou de façon hermétique.

4. Elément de construction selon une des revendications précédentes,
caractérisé en ce que l'épaisseur des parois (22, 24) s'élève à environ 2 mm et en ce que celles-ci sont transparentes.

5. Elément de construction selon une des revendicaticns précédentes,
caractérisé en ce qu'il est en forme de U, les ailes du U (10, 12) formant les parois latérales et l'âme (14), reliant celles-ci l'une à l'autre, formant le toit d'une serre, en particulier réalisé sous forme de comble à pignon ou courbe de façon convexe vers l'extérieur.

6. Elément de construction selon une des revendications 1 à 4,
caractérisé par deux treillis d'armature (26, 28) en forme de U disposés l'un dans l'autre, pour former un bac, en particulier un bac à plantes, ainsi que des treillis d'armature (50) associés frontalement à ceux-ci, le treillis d'armature interne (28) reposant, par son âme plane reliant l'une à l'autre les ailes du U (36, 38), sur l'âme de liaison (34), de même plane, de l'autre treillis d'armature (26), et les ailes du U (36, 38) du treillis d'armature interne (28) s'étendant de façon inclinée vers l'extérieur en direction des ailes du U (30, 32) du treillis d'armature externe (26), disposées généralement orthogonalement à leur âme de liaison, et les deux treillis d'armature (26, 28) en forme de U, sur leur côté externe, étant enveloppés de matière synthétique thermodurcissable formant une "coque" (enveloppe 40), et les treillis d'armature frontaux (50) étant enveloppés des deux côtés de matière synthétique thermodurcissable.

7. Elément de construction selon la revendication 6, caractérisé en ce qu'une partie (30', 32') des ailes du U (30, 32) du treillis d'armature externe (26) est cintrée vers l'intérieur et vers le bas, de sorte que ces parties s'étendent généralement parallèlement aux ailes du U (36, 38) du treillis d'armature interne (28), orientées de façon inclinée vers le haut et vers l'extérieur.

8. Elément de construction selon la revendication 6 ou 7, caractérisé en ce que, sur les parois frontales (42) du bac à plantes, sont disposés des éléments de liaison (44, 46) pour la liaison mutuelle de bacs à plantes.

## Fig. 1

## Fig. 1a

Fig. 2

Fig.3

48  46  52  50

54